(19) Europäisches Patentamt
European Patent Office
Office européen des brevets

(11) EP 3 016 278 B1

(12) FASCICULE DE BREVET EUROPEEN

(45) Date de publication et mention
de la délivrance du brevet:
**01.08.2018 Bulletin 2018/31**

(51) Int Cl.:
***H02S 50/10*** *(2014.01)*

(21) Numéro de dépôt: **15192384.4**

(22) Date de dépôt: **30.10.2015**

(54) **DIAGNOSTIC D'UN SYSTÈME PHOTOVOLTAÏQUE PAR UN SYSTÈME MULTI-AGENTS**

DIAGNOSE EINES FOTOVOLTAIKSYSTEMS MITHILFE EINES MULTIAGENTENSYSTEMS

DIAGNOSIS OF A PHOTOVOLTAIC SYSTEM BY A MULTI-AGENT SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.11.2014 FR 1460557**

(43) Date de publication de la demande:
**04.05.2016 Bulletin 2016/18**

(73) Titulaire: **COMMISSARIAT À L'ÉNERGIE
ATOMIQUE ET AUX
ÉNERGIES ALTERNATIVES
75015 Paris (FR)**

(72) Inventeurs:
• **HA, Duy Long**
**F-38400 Saint Martin D'heres (FR)**
• **JOUMAA, Hussein**
**F-38400 Saint Martin D'heres (FR)**

(74) Mandataire: **Novaimo
ActiTech 8
60 avenue Marie Curie
Archamps Technopole
74166 Saint Julien-en-Genevois Cedex (FR)**

(56) Documents cités:
**WO-A1-2013/170422 DE-A1-102012 102 932
US-A1- 2013 307 556**

EP 3 016 278 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé de diagnostic d'un système photovoltaïque ainsi qu'un système photovoltaïque mettant en oeuvre un tel procédé.

Les systèmes de production d'énergie évoluent et intègrent de plus en plus de sources de production d'énergie renouvelable, et notamment des systèmes photovoltaïques. Ces derniers sont de plus en plus complexes et les solutions existantes pour leur gestion sont inadaptées et insuffisantes.

Ainsi, un objet général de l'invention est de proposer une solution améliorée pour le diagnostic d'un système photovoltaïque. Le document WO2013/170422A décrit un procédé de diagnostic d'une système photovoltaïque. Plus précisément, un objet de l'invention est de proposer une solution atteignant tout ou partie des objets suivants, consistant à réaliser un diagnostic adapté à du temps réel ou quasi temps-réel, et/ou adapté à un système photovoltaïque complexe comprenant une multitude de modules photovoltaïques, et/ou permettant une détection fiable et performante d'une défaillance d'un système photovoltaïque.

A cet effet, l'invention repose sur un procédé de diagnostic d'un système photovoltaïque comprenant au moins un champ photovoltaïque, des agents modules associés à des sous-ensembles d'au moins un module photovoltaïque d'un champ photovoltaïque, éventuellement un ou plusieurs capteur(s) et leur agent capteur associé, les agents modules et les agents capteurs formant des agents locaux, et le système photovoltaïque comprenant de plus un agent gestionnaire local et des dispositifs de communication entre les différents agents, caractérisé en ce qu'il comprend une phase de diagnostic, qui comprend la répétition des étapes suivantes :

- mesure et/ou estimation d'une ou plusieurs grandeurs de fonctionnement d'un sous-ensemble du système photovoltaïque au niveau d'un agent local associé ;
- calcul d'une ou plusieurs grandeurs de référence dudit sous-ensemble du système photovoltaïque par un modèle de référence au niveau dudit agent local associé ;
- comparaison d'une grandeur mesurée ou estimée avec la même grandeur de référence obtenue par le modèle de référence ;
- en cas de différence dépassant un seuil prédéfini, transmission d'un message de défaut par l'agent local à l'agent gestionnaire local et mise en oeuvre de l'étape suivante par l'agent gestionnaire local :
- vérification du défaut au niveau de l'agent gestionnaire local par comparaison avec au moins une grandeur similaire mesurée et/ou estimée par un agent local distinct du système photovoltaïque présentant des similitudes, comme un positionnement voisin et/ou une même orientation et inclinaison.

L'agent gestionnaire local peut mettre en oeuvre une étape supplémentaire de recherche du type de défaut et de mémorisation du défaut dans une mémoire électronique si la vérification confirme le défaut ou peut mettre en oeuvre une étape supplémentaire de modification du modèle de référence de l'agent local si le défaut n'est pas vérifié.

L'agent gestionnaire local peut mettre en oeuvre les étapes suivantes :

- formation de groupes d'agents locaux selon un ou plusieurs modèles de regroupement, notamment selon des groupes de voisins regroupant des sous-ensembles du système photovoltaïque positionnés à proximité, et selon des groupes de semblables regroupant des sous-ensembles présentant des paramètres similaires comme une même orientation et inclinaison ;
- en cas de réception d'un message de défaut par un agent local, l'étape de vérification du défaut comprend la comparaison d'au moins une grandeur de fonctionnement de l'agent local avec la même grandeur obtenue pour les autres agents d'un même groupe, et si le défaut n'est pas vérifié, modification d'un ou plusieurs modèle(s) de regroupement de l'agent gestionnaire local et répétition de l'étape de vérification avec des regroupements différents de l'agent local concerné par le défaut.

Le procédé de diagnostic d'un système photovoltaïque peut comprendre les étapes préalables suivantes dans une première phase d'enregistrement :

- création d'un agent par la réception de données liées à son fonctionnement, comprenant des données physiques et des données géométriques, comme son positionnement, son orientation et inclinaison ;
- définition d'un modèle de référence permettant de calculer une ou plusieurs grandeurs de référence représentative(s) du fonctionnement de l'agent;
- enregistrement de l'agent dans une mémoire électronique formant un annuaire au niveau de l'agent gestionnaire local.

L'annuaire peut comprendre les informations suivantes pour chaque agent module ou capteur du système photovoltaïque :

- L'adresse et/ou l'identifiant ;
- Des informations techniques comme des données géométriques, une orientation, une inclinaison, une position ;
- Une fonction de chaque agent, comme la fonction de module ou de capteur, qui permet de connaître la fonctionnalité des composants physiques associés à chaque agent ;
- L'appartenance à un ou plusieurs groupes ;
- Un statut « actif » ou « inactif ».

Le procédé peut comprendre le choix du modèle de référence pour un agent module pour lequel un capteur d'irradiance est disponible, ce modèle de référence permettant le calcul de la puissance de référence par au moins un module photovoltaïque par l'équation suivante :

$$P_{ref} = P_c \ ^* \ \gamma \ G \ / \ G_0 \ ^* \ [ \ (1 + \beta\alpha \ (T - 25) \ ]$$

Où $\gamma$ et $\beta$ sont des coefficients qui permettent de tenir compte des pertes du système photovoltaïque et de corriger le paramètre $\alpha$, qui est généralement fourni par le fabricant,
G est l'irradiance mesurée, T la température,
$P_c$ est la puissance crête du système photovoltaïque,
$G_0$ est l'irradiance de référence, égale à $1000W/m^2$.

L'agent gestionnaire local peut gérer les deux bases de données suivantes :

- une base de données comprenant des informations sur l'historique des mesures passées, comme les profils de production et/ou de mesures de courant AC et/ou DC des modules du champ photovoltaïque ;
- une base de données comprenant des informations sur les défauts des modules photovoltaïques et leurs conséquences sur leur production d'énergie.

L'agent gestionnaire local peut transférer un agent local en mode inactif en cas de détection d'un défaut.
Un agent gestionnaire global peut échanger des communications avec les différents agents locaux pour calculer des paramètres de transposition, notamment un angle de transposition entre les différents champs photovoltaïques.
Un agent gestionnaire global peut mettre en oeuvre les étapes suivantes :

- Réception de mesures et/ou estimations de productions d'énergie par plusieurs champs photovoltaïques, par une transmission depuis chaque agent local concerné ;
- Transposition de ces mesures et/ou estimations par utilisation des paramètres de transposition ;
- Comparaison des mesures et/ou estimations transposées ;
- Détection d'une anomalie si les mesures et/ou estimations transposées d'un certain champ photovoltaïque s'éloignent de celles des autres,
- En cas de détection d'une anomalie, transmission d'une alerte de l'agent gestionnaire global à l'agent gestionnaire local.

L'invention porte aussi sur un système photovoltaïque, caractérisé en ce qu'il comprend au moins un champ photovoltaïque, des agents modules associés à des sous-ensembles d'au moins un module photovoltaïque du champ photovoltaïque, un agent gestionnaire local, et des dispositifs de communication entre les différents agents, caractérisé en ce que les agents modules et l'agent gestionnaire local comprennent des moyens logiciels qui mettent en oeuvre un procédé de diagnostic du système photovoltaïque tel que décrit précédemment.
Le système photovoltaïque peut comprendre au moins un capteur et un agent capteur, du type capteur d'irradiance, de température, de données satellite.
Le système photovoltaïque peut comprendre un agent gestionnaire local relié par des dispositifs de communication à plusieurs agents gestionnaires locaux.
Ces objets, caractéristiques et avantages de la présente invention seront exposés en détail dans la description suivante d'un mode d'exécution particulier fait à titre non-limitatif en relation avec les figures jointes parmi lesquelles :

La figure 1 représente un système photovoltaïque selon un mode de réalisation de l'invention.

La figure 2 représente la structure d'une base de données formant un annuaire du système photovoltaïque selon le mode de réalisation de l'invention.

La figure 3 représente un organigramme du procédé de diagnostic du système photovoltaïque selon le mode de réalisation de l'invention.

La figure 4 représente un système photovoltaïque selon un second mode de réalisation de l'invention.

L'invention repose sur l'analyse d'un système photovoltaïque selon une approche de type système multi-agents (SMA). Dans cette approche, un système photovoltaïque est considéré comme la réunion de sous-systèmes indépendants, appelés agents, qui communiquent entre eux. La mise en oeuvre du procédé de diagnostic du système photovoltaïque est alors partagée en plusieurs niveaux, et non centralisée, la solution étant obtenue par cette résolution distribuée multi-agents, selon un procédé qui sera décrit ultérieurement.

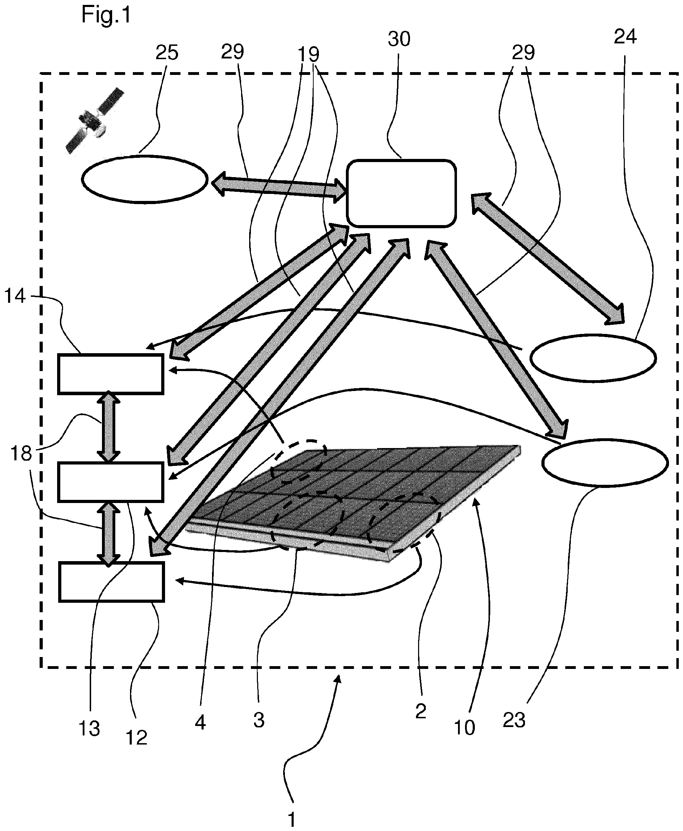

Selon un mode de réalisation de l'invention représenté par la figure 1, un système photovoltaïque comprend les différents sous-systèmes suivants :

- Un champ photovoltaïque 10 comprenant plusieurs ensembles de modules 2, 3, 4 ;
- Des agents modules 12, 13, 14 respectivement associés aux ensembles de modules 2, 3, 4 ;
- Des dispositifs de communication 18 entre les agents modules ;
- Des agents capteurs d'irradiance 23, 24 respectivement associés aux agents modules 13, 14 ;
- Un agent de données satellite 25 ;
- Un agent gestionnaire local 30 du champ photovoltaïque 10 ;
- Des dispositifs de communication 19 entre les agents modules et l'agent gestionnaire local 30 ;
- Des dispositifs de communication 29 entre les agents capteurs et/ou de données satellite et l'agent gestionnaire local 30.

Les agents modules, capteurs, et de données satellite sont considérés de type local et seront appelés « agents locaux », puisqu'ils sont associés à des sous-ensembles du système de production d'énergie, sur le terrain. L'agent gestionnaire local se présente au contraire comme une unité de gestion de l'ensemble du champ photovoltaïque.

Dans ce mode de réalisation, les fonctionnalités permettant le diagnostic du système photovoltaïque sont réparties sur deux niveaux :

- Un premier au niveau des agents locaux, notamment modules et capteurs, où une calibration d'un modèle de l'agent et une première partie d'une phase de diagnostic sont mises en oeuvre ;
- Un second au niveau de l'agent gestionnaire local, où une calibration de groupes d'agents est réalisée, ainsi qu'une validation du modèle de l'agent mentionné ci-dessus, et une seconde partie de la phase de diagnostic sont mises en oeuvre.

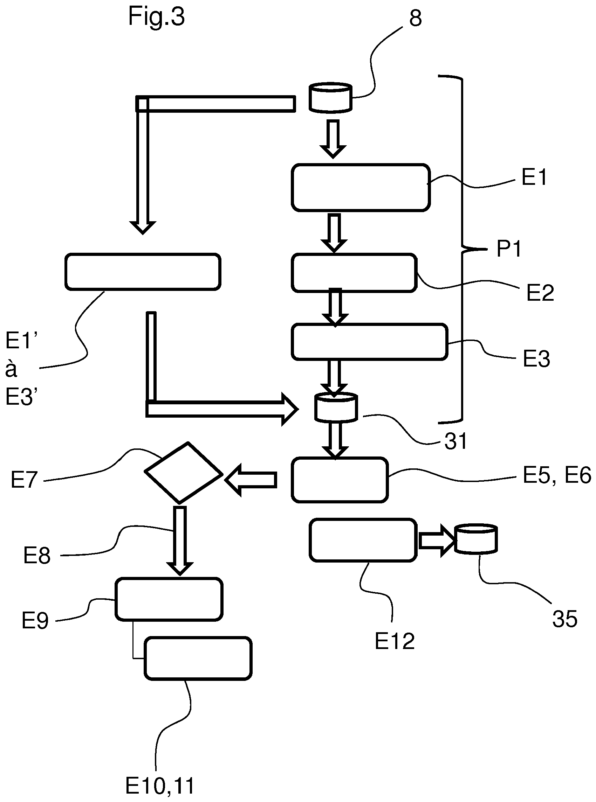

Nous allons maintenant détailler les structures et fonctionnalités de chaque agent du système photovoltaïque, avant de présenter le procédé de diagnostic mis en oeuvre globalement par le système photovoltaïque 1 selon un mode de réalisation, illustré par la figure 3.

L'agent gestionnaire local 30 se présente sous la forme d'une entité de calcul, par exemple tout calculateur comprenant un support logiciel et au moins une mémoire électronique, pour mettre en oeuvre les fonctionnalités qui vont être décrites ci-après. Cet agent se présent comme une unité centrale du système photovoltaïque 1.

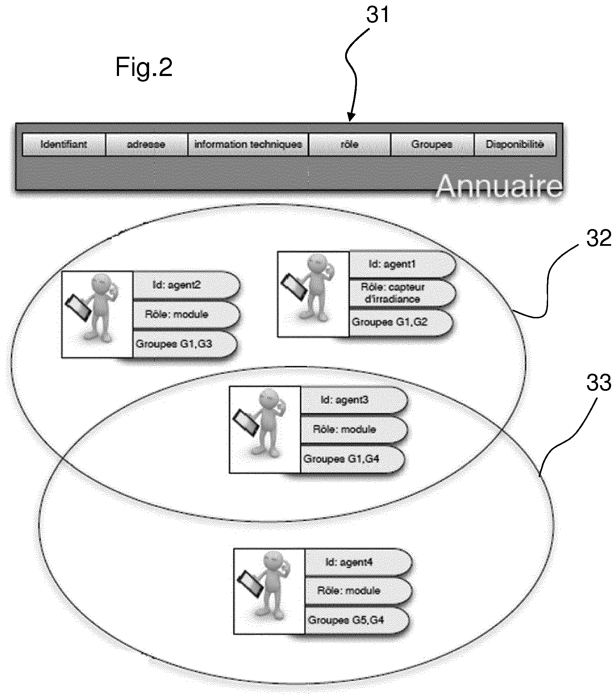

Notamment, l'agent gestionnaire local 30 gère une base de données des différents agents su système photovoltaïque, que nous appellerons simplement annuaire 31, plus particulièrement représentée par la figure 2. L'annuaire 31 comprend les informations suivantes pour chaque agent local du système photovoltaïque :

- L'adresse et/ou l'identifiant ;
- Des informations techniques comme des données géométriques, une orientation, une inclinaison, une position ;
- Une fonction de chaque agent, ou rôle, comme la fonction de modules, de capteurs, etc., qui permet de connaître la fonctionnalité des composants physiques associés à chaque agent local ;
- L'appartenance à un ou plusieurs groupes.

On distingue notamment deux familles de groupes : les groupes de voisins 32, qui réunissent les agents positionnés à proximité, et les groupes de semblables 33 qui réunissent des agents qui possèdent des caractéristiques similaires, comme une même orientation et inclinaison.

L'agent gestionnaire local 30 gère une seconde base de données 35 comprenant des informations sur l'historique des mesures passées, comme les profils de production et/ou de mesures de courant AC et/ou DC des modules du champ photovoltaïque.

L'agent gestionnaire local 30 gère une troisième base de données comprenant des informations sur les défauts des modules photovoltaïques et leurs conséquences sur leur production d'énergie. Le tableau ci-dessous résume certains défauts à titre d'exemples. Cette base est utilisée pour identifier un type de défaut rencontré.

| Défaut | Conséquences |
|---|---|
| Ombrage partiel | Détérioration de cellules, perte de puissance |
| Salissure | Perte de puissance |
| Fissure | Détérioration de cellules, perte de performance |
| Dégradation par la chaleur | Diminution de la performance, détérioration des joints |

L'agent gestionnaire local 30 met en oeuvre des étapes de communication avec les différents agents du système photovoltaïque 1, et des étapes de calcul pour participer plus directement à la fonction de diagnostic.

Plus précisément, l'agent gestionnaire local 30 met en oeuvre une étape d'enregistrement des différents agents du système photovoltaïque dans une première phase P1 d'enregistrement. Pour cela, il traite une demande d'enregistrement d'un agent en enregistrant leur adresse et leurs paramètres dans l'annuaire 31. Il leur affecte aussi un identifiant. Ensuite, il met en oeuvre les étapes suivantes pour inscrire l'agent dans un ou plusieurs groupes du système photovoltaïque :

- Si l'agent est positionné au voisinage d'autres agents, il est affecté au groupe de voisinage réunissant lesdits agents. Le critère de proximité est prédéfini par un certain modèle, qui peut évoluer comme cela sera explicité par la suite ;
- Si d'autres agents présentent des similitudes, comme une même orientation et/ou inclinaison, l'agent est affecté à un groupe de semblables aves lesdits agents similaires. De même, ce regroupement est effectué sur la base d'un modèle de regroupement, qui est évolutif.

L'agent gestionnaire local 30 met en oeuvre une étape préalable de vérification si l'agent concerné était déjà inscrit dans le passé. Si c'est le cas, il peut simplement changer son statut du mode « inactif » à « actif » dans l'annuaire 31. En complément, l'agent gestionnaire local 30 peut mettre en oeuvre une étape inverse de désenregistrement d'un agent, par exemple dans une situation où l'agent doit être réparé. Dans un tel cas, l'agent gestionnaire local 30 le conserve dans l'annuaire 31, mais lui attribue un statut « inactif ».

D'autre part, dans sa gestion de l'annuaire 31, l'agent gestionnaire local 30 peut échanger différentes communications avec les autres agents, par l'intermédiaire des dispositifs de communication 19, 29. De tels échanges peuvent être :

- Une demande d'un agent module sur la présence ou non d'un capteur d'irradiance. L'agent gestionnaire local 30 vérifie s'il existe dans l'annuaire un capteur d'irradiance enregistré dans le même groupe de semblables (même orientation et inclinaison) que l'agent module. Si c'est le cas, l'agent gestionnaire local 30 envoie l'adresse en retour à l'agent module. Si ce n'est pas le cas, l'agent gestionnaire local 30 cherche s'il existe un capteur d'irradiance associé au champ photovoltaïque, puis envoie son adresse en retour à l'agent module ;
- Une demande d'un agent module sur la présence ou non d'un agent satellite. L'agent gestionnaire local 30 vérifie si un tel agent existe dans l'annuaire, puis envoie à l'agent module son adresse ;
- Une demande d'un agent module sur l'existence d'un groupe de semblables, c'est-à-dire comprenant des agents avec une même orientation et inclinaison que lui. Si c'est le cas, l'agent gestionnaire local 30 transmet en retour à l'agent module la liste des agents du groupe avec leurs adresses ;
- Une demande d'un agent module sur l'existence de voisins. Si c'est le cas, l'agent gestionnaire local 30 transmet en retour à l'agent module la liste des agents voisins avec leurs adresses.

Enfin, l'agent gestionnaire local 30 participe plus directement au procédé de diagnostic de l'installation photovoltaïque 1 dans une seconde phase P2. Pour cela, il met en oeuvre les étapes suivantes lorsqu'il reçoit un message de détection d'un défaut local par un agent :

- Une étape d'identification du ou des groupes auxquels l'agent potentiellement défectueux est enregistré,
- Une demande aux agents de ces groupes de leurs données mémorisées, notamment les mesures de production dans le cas d'agents modules, et/ou toute autre grandeur représentative du fonctionnement d'un agent (ou plus précisément de son entité physique associée) ;

- Une étape de vérification et de comparaison des données de tout ou partie des agents d'un même groupe, qui permet de valider ou non que l'agent module potentiellement défectueux s'éloigne des autres agents du même groupe, ce qui confirme ou non sa défaillance ;
- Si la défaillance est confirmée, une étape d'identification du défaut, par une consultation de la troisième base de données des défauts ;
- Si la défaillance n'est pas confirmée, l'agent gestionnaire local 30 remet en cause le groupe auquel l'agent concerné est rattaché, en recherchant notamment d'autres groupes de voisinage auxquels il pourrait être rattaché, par une évolution de son modèle de voisinage. Pour cela, il peut comprendre en mémoire un historique d'évolution des modèles de voisinage. La même démarche peut être suivie pour un groupe de semblables. Si un autre groupe est formé, les étapes précédentes sont répétées : après ces répétitions, si aucune défaillance n'est confirmée, le modèle de référence mis en oeuvre localement au niveau de l'agent concerné, qui sera illustré par la suite, est remis en cause et ses paramètres sont revérifiés, de même que ses appartenances à des groupes de voisins et de semblables.

En fonctionnement normal, l'agent gestionnaire local 30 reçoit des données de mesure ou de calcul des différents agents, notamment les mesures (ou estimations) de production des agents modules, et les mémorise dans la seconde base de données 35 des historiques.

Un agent module 12, 13, 14 est une entité intelligente de type calculateur, qui se présente sous la forme de matériel et/ou logiciel (hardware et/ou software), associée à un module photovoltaïque ou à un groupe de modules photovoltaïques 2, 3, 4. Cet agent module met en oeuvre plusieurs étapes d'un procédé de diagnostic, plus précisément d'une phase P1 préalable d'enregistrement et d'une phase P2 de diagnostic.

Il met d'abord en oeuvre une étape d'enregistrement, réalisée auprès d'un agent gestionnaire local, décrit précédemment, à partir d'un dispositif de communication 19. Cet enregistrement est effectué lors de la création de l'agent, c'est-à-dire notamment lors de l'ajout d'au moins un nouveau module photovoltaïque associé audit agent module au sein du système photovoltaïque. Cette étape d'enregistrement comprend les sous-étapes suivantes :

- échange d'informations liées au protocole de communication de l'agent module et/ou de l'agent gestionnaire local concerné ;
- transmission d'une adresse de l'agent module vers l'agent gestionnaire local ;
- transmission d'informations techniques, notamment liées aux caractéristiques du ou des modules photovoltaïque(s) concerné(s) par l'enregistrement, par exemple géographiques et électriques, comprenant notamment : la puissance crête, la position, l'orientation, l'inclinaison. Ces informations sont préalablement mémorisées dans une mémoire électronique 8, par exemple une base de données, et sont récupérées par l'agent module pour leur transmission à l'agent gestionnaire local 30 ;
- transmission de données liées à l'historique de production du ou des modules photovoltaïques associés. Ces données d'historique, notamment des mesures de puissance produite dans le passé, de courant AC et/ou DC, etc., sont aussi récupérées par l'agent module dans une mémoire électronique, par exemple de type base de données.

Ensuite, l'agent module met en oeuvre une étape de calcul d'une puissance de référence $P_{ref}$, à partir d'un modèle de calcul de production d'énergie du ou des modules auxquels il est associé. Ce modèle de calcul de production d'énergie peut être transmis à l'agent module au moment de l'étape d'enregistrement. En première variante, ce modèle est construit par l'agent module par une procédure d'apprentissage, à partir de données passées. En seconde variante, ce modèle est directement mémorisé au sein de l'agent module. Naturellement, ces variantes peuvent être combinées.

Selon un mode de réalisation dans lequel un capteur d'irradiance est disponible, un modèle de production d'énergie $P_{ref}$ par un module peut reposer sur l'équation suivante :

$$P_{ref} = P_c \; {}^* \; \gamma \, G \, / \, G_0 \; {}^* \; [ \; (1 + \beta\alpha \, (T - 25) \; ]$$

Où $\gamma$ et $\beta$ sont des coefficients qui permettent de tenir compte des pertes du système photovoltaïque et de corriger le paramètre $\alpha$, qui est généralement fourni par le fabricant,
G est l'irradiance mesurée, T la température de l'ambiance,
$P_c$ est la puissance crête du système photovoltaïque,
$G_0$ est l'irradiance de référence, égale à 1000W/m$^2$.

Les coefficients $\gamma$ et $\beta$ sont estimés dans une phase d'apprentissage, à partir de données mesurées dans le passé, mémorisées sous une forme « d'historique » dans une mémoire électronique. En variante simplifiée, on pourrait considérer $\gamma$ = 1 et $\beta$ = 1. Naturellement, toute autre formule d'estimation de la puissance d'énergie $P_{ref}$ peut être en variante utilisée.

Selon une variante de réalisation dans laquelle aucun capteur d'irradiance n'est positionné au niveau du groupe de modules concernés, l'agent module communique avec le gestionnaire local de champ pour savoir si il existe un capteur d'irradiance dans le système photovoltaïque. Si c'est le cas, les informations le concernant lui sont transmises, notamment sa position, son orientation, et il transforme ses mesures par un algorithme de transposition pour en déduire une valeur d'irradiance adaptée au groupe de modules concernés, avant d'appliquer finalement le modèle de production d'énergie décrit ci-dessus.

La puissance de production d'énergie est la grandeur choisie car elle est directement caractéristique du fonctionnement des modules photovoltaïques associés. En variante, d'autres grandeurs électriques pourraient être observées.

Ensuite, l'agent module a besoin de données mesurées pour exploiter ce modèle, qui forment les variables du modèle, comme la mesure d'irradiance. Pour cela, l'agent module 12, 13, 14 met en oeuvre une étape d'interrogation de l'agent gestionnaire local 30 sur la présence ou non d'un capteur d'irradiance 23, 24 associé aux modules, ou, en son absence, sur la présence d'un capteur d'irradiance associé au champ photovoltaïque 10 hors du voisinage immédiat du ou des modules physiques associés à l'agent module.

Selon une variante de réalisation dans laquelle aucun capteur d'irradiance n'est disponible, l'agent module met en oeuvre les étapes suivantes :

- Il interroge l'agent gestionnaire local 30 pour obtenir une ou plusieurs adresses d'agents modules du même groupe ;
- Il interroge le ou les agents modules par l'intermédiaire de leurs adresses obtenues à l'étape précédente pour obtenir leur mesure de leur production d'énergie réelle actuelle ;
- Il utilise cette ou ces mesures de production d'énergie pour calculer la valeur de la production de référence $P_{ref}$.

Dans une seconde phase P2, l'agent module met aussi en oeuvre une étape de diagnostic local, par l'intermédiaire d'une vérification locale de la production d'énergie du module ou du groupe de modules. Pour cela, l'agent module reçoit la mesure de production réelle de tout ou partie des modules du groupe, et établit une comparaison avec la production d'énergie de référence $P_{ref}$. La mesure de production réelle peut être obtenue par un ou plusieurs capteurs positionnés au niveau du groupe de modules. En variante, elle peut être estimée à partir d'une autre grandeur mesurée. Si l'écart issu de cette comparaison est supérieur à un seuil prédéfini, par exemple mémorisé dans une mémoire électronique associée au système photovoltaïque et lu par l'agent module, alors l'agent module détecte une anomalie et transmet une alerte à l'agent gestionnaire local. Cette étape de diagnostic local peut être répétée périodiquement, par exemple chaque période T.

Chaque agent module peut être sollicité par d'autres composants du système photovoltaïque, comme d'autres agents modules ou un gestionnaire local, et remplit donc des étapes de communication avec ces autres composants, notamment de réponse à leurs interrogations.

Enfin, un agent module met aussi en oeuvre une étape de désenregistrement, opposée à l'étape d'enregistrement, qui consiste à sa suppression de l'annuaire du gestionnaire local des modules, pour ne plus être impliquer par le processus de gestion, voire en une demande de passage en mode « inactif ».

Un agent capteur est une entité intelligente de type calculateur, qui se présente sous la forme de matériel et/ou logiciel (hardware et/ou software), associée à un capteur physique de mesure d'une grandeur utile à la gestion du système photovoltaïque. Ainsi, il peut y avoir par exemple un agent capteur d'irradiance, un agent capteur de température, un agent serveur de données satellites. Cet agent capteur met en oeuvre plusieurs étapes utiles au procédé de diagnostic d'un système photovoltaïque, ainsi qu'une phase de son propre diagnostic sur le principe décrit pour un agent module.

Un agent capteur met en oeuvre une étape d'enregistrement auprès de l'annuaire 31 d'un agent gestionnaire local 30. En retour, il reçoit un identifiant. Il met aussi en oeuvre une étape opposée de désenregistrement, utile par exemple durant une période de réparation de défauts du capteur associé, pour ne pas être sollicité par le système photovoltaïque tant qu'il n'est pas opérationnel.

Il ressort de la description précédente que le procédé de diagnostic du système photovoltaïque repose sur la combinaison de tâches partagées sur deux niveaux différents, deux entités physiques distinctes du système :

- Chaque agent local met en oeuvre une étape de mesure et/ou d'estimation d'au moins une grandeur caractéristique de son fonctionnement, une étape de définition d'un modèle de référence permettant de calculer au moins une grandeur de référence, puis une étape de comparaison des grandeurs mesurées et/ou estimées avec les grandeurs de référence calculées, pour en déduire ou non un défaut en fonction du résultat de cette comparaison ;
- Un agent gestionnaire local forme des groupes d'agents locaux, définit pour cela un modèle de regroupement, notamment de voisinage, puis valide ou non un défaut d'un agent sur la base de comparaisons avec des grandeurs comparables transmises par d'autres agents d'un même groupe. Ces vérifications centralisées permettent de valider qu'un défaut constaté localement provient d'un réel défaut et non du modèle utilisé par l'agent local pour calculer les grandeurs de référence.

Ces principes sont illustrés par la figure 3, qui résume les étapes du procédé de diagnostic d'un système photovoltaïque.

Dans une première phase P1, les différents sous-ensembles du système photovoltaïque 1 sont enregistrés dans l'annuaire 31. Pour cela, comme cela a été détaillé précédemment, les étapes suivantes sont mises en oeuvre pour chaque agent :

- Une étape de création E1 d'un agent, incluant la définition de paramètres liés à son fonctionnement, notamment techniques et géométriques, provenant de données de son fabriquant et/ou de données mémorisées dans une base de données 8 ;
- Une étape de définition E2 d'un modèle de référence permettant de calculer une ou plusieurs grandeurs de référence représentative(s) du fonctionnement de l'agent (ou plus exactement de l'entité physique à laquelle l'agent est associé) ;
- Une étape d'enregistrement E3 de l'agent dans l'annuaire 31.

Cette première phase P1 est mise en oeuvre pour toutes les catégories d'agents, notamment les agents modules (E1 à E3) et les agents capteurs (E1' à E3').

Dans une seconde phase de diagnostic P2, le système photovoltaïque met en oeuvre son autodiagnostic en mode de fonctionnement normal. Pour cela, il comprend la réalisation des étapes complémentaires suivantes, réparties entre les niveaux locaux et centralisés, comme explicité ci-dessus :

- Une étape de mesure et/ou d'estimation E5 d'une ou plusieurs grandeurs de fonctionnement d'un sous-ensemble du système photovoltaïque au niveau d'un agent local associé, par exemple un agent module pour un ensemble d'au moins un module photovoltaïque, et un agent capteur pour un capteur de mesures, par exemple de température, d'irradiance, de données satellite, etc. ;
- Une étape de calcul E6 d'une ou plusieurs grandeurs de référence du sous-ensemble du système photovoltaïque au niveau d'un agent local associé ;
- Une étape de comparaison E7 de la (ou les) grandeur mesurée ou estimée avec la même grandeur de référence obtenue par le modèle de référence. En remarque, ces étapes peuvent se répéter de manière périodique, selon une période prédéfinie ;
- En cas de différence dépassant un seuil prédéfini, par exemple un écart au-delà de 10%, ou de 15%, ou de 20%, les étapes complémentaires suivantes de diagnostic sont mises en oeuvre au niveau de l'agent gestionnaire local 30 ;
- Transmission d'un message de défaut E8 par l'agent local à l'agent gestionnaire local 30 ;
- Une étape de vérification E9 du défaut au niveau de l'agent gestionnaire local par comparaison avec au moins une grandeur similaire mesurée et/ou estimée par un agent local d'un même groupe ; si cette vérification ne confirme pas le défaut, modification de l'affectation de l'agent local en recherchant d'autres groupes auxquels il pourrait appartenir, en modifiant le cas échéant le modèle de formation de groupes, et répétition de la comparaison avec les autres agents locaux du nouveau groupe auquel il appartient ;

Si le défaut est vérifié, l'agent gestionnaire local 30 met en oeuvre les étapes suivantes :

- Recherche de l'identification du défaut E10 et mémorisation du défaut et de ses conséquences dans une mémoire électronique.

Si le défaut n'est pas vérifié, l'agent gestionnaire local 30 met en oeuvre les étapes suivantes :

- Modification E11 du modèle de référence de l'agent local.

En remarque, lors de son fonctionnement, l'agent local met en oeuvre une étape de mémorisation E12 les données mesurées et/ou estimées dans une base de données 35, locale ou au niveau de l'agent gestionnaire local 30.

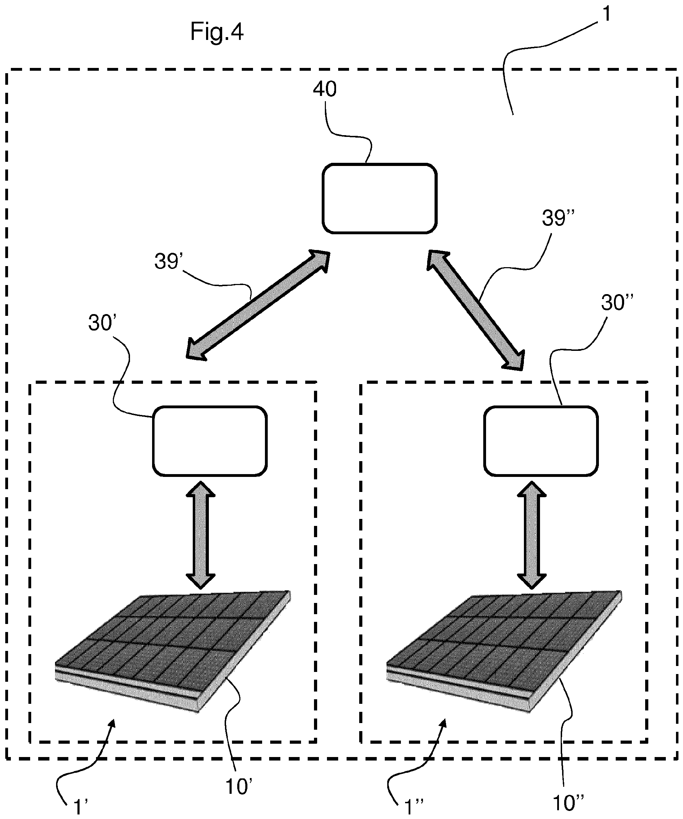

Selon un second mode de réalisation illustré par la figure 4, particulièrement adapté aux systèmes photovoltaïques de grande dimension, dans lesquels plusieurs champs photovoltaïques 10', 10" sont distingués, un troisième niveau est ajouté par l'intermédiaire d'un agent gestionnaire global 40, qui se présente sous la forme d'une unité centrale de gestion, comprenant un calculateur, au moins une mémoire électronique et des moyens logiciels. Cet agent gestionnaire global 40 est relié par des dispositifs de communication 39', 39" respectivement aux différents agents gestionnaires locaux 30', 30". Les systèmes photovoltaïques 1', 1" présentent la même architecture que celle décrite en référence avec la figure 1, et forment des sous-systèmes du système photovoltaïque 1 complet.

L'agent gestionnaire global 40 échange des communications avec les différents agents locaux 30', 30" pour calculer des paramètres de transposition, notamment un angle de transposition, entre les différents champs photovoltaïques 10', 10". Ce calcul peut être réalisé dès que tous les agents sont enregistrés auprès de leur agent gestionnaire local. Ce calcul comprend les étapes suivantes :

- Transmission de données d'orientation et d'inclinaisons de chaque champ photovoltaïque par leur agent gestionnaire local associé ;
- Calcul d'un angle de transposition pour chaque champ photovoltaïque par l'agent gestionnaire global et mémorisation du résultat, et transmission éventuelle à chaque agent gestionnaire local 30', 30".

Ces étapes sont répétées dès qu'une modification de géométrie apparaît au niveau du système photovoltaïque.

Ensuite, l'agent gestionnaire global 40 participe directement au procédé de diagnostic du système photovoltaïque par la mise en oeuvre des étapes suivantes :

- Réception des mesures et/ou estimations de production d'énergie par chaque champ photovoltaïque, par une transmission depuis chaque agent local concerné. Ces grandeurs de production d'énergie sont transposées par utilisation des angles de transposition calculés précédemment ;
- Comparaison des grandeurs de production d'énergie transposées. Cette comparaison peut mettre en oeuvre une pondération sur la puissance crête. Si un écart important est détecté pour un certain champ photovoltaïque par rapport aux autres, par un dépassement d'un seuil prédéfini, alors l'agent gestionnaire global transmet une alerte à l'agent gestionnaire local concerné qui déclenche le diagnostic local de tous ses agents locaux pour trouver la défaillance. Les résultats de comparaison sont mémorisés dans une mémoire électronique associée à l'agent gestionnaire global.

Naturellement, d'autres modes de réalisation peuvent être imaginés. Notamment, la présence de capteurs reste optionnelle, leur absence pouvant être compensée par des éventuels calculs d'estimations.

**Revendications**

1. Procédé de diagnostic d'un système photovoltaïque (1) comprenant au moins un champ photovoltaïque (10), des agents modules (12, 13, 14) associés à des sous-ensembles (2, 3, 4) d'au moins un module photovoltaïque d'un champ photovoltaïque (10 ; 10', 10"), éventuellement un ou plusieurs capteur(s) et leur agent capteur associé, les agents modules et les agents capteurs formant des agents locaux, et le système photovoltaïque (1) comprenant de plus un agent gestionnaire local (30 ; 30', 30") et des dispositifs de communication (18, 19, 29) entre les différents agents, **caractérisé en ce qu'**il comprend une phase de diagnostic (P2), qui comprend la répétition des étapes suivantes :

   (E5) : mesure et/ou estimation d'une ou plusieurs grandeurs de fonctionnement d'un sous-ensemble (2, 3, 4) du système photovoltaïque (1) au niveau d'un agent local (12, 13, 14) associé ;
   (E6) : calcul d'une ou plusieurs grandeurs de référence dudit sous-ensemble du système photovoltaïque par un modèle de référence au niveau dudit agent local associé ;
   (E7) : comparaison d'une grandeur mesurée ou estimée avec la même grandeur de référence obtenue par le modèle de référence ;
   (E8) : en cas de différence dépassant un seuil prédéfini, transmission d'un message de défaut par l'agent local à l'agent gestionnaire local (30 ; 30', 30") et mise en oeuvre de l'étape suivante par l'agent gestionnaire local :

      (E9) : vérification du défaut au niveau de l'agent gestionnaire local par comparaison avec au moins une grandeur similaire mesurée et/ou estimée par un agent local distinct du système photovoltaïque présentant des similitudes, comme un positionnement voisin et/ou une même orientation et inclinaison.

2. Procédé de diagnostic d'un système photovoltaïque (1) selon la revendication précédente, **caractérisé en ce que** l'agent gestionnaire local (30; 30', 30") met en oeuvre une étape supplémentaire de recherche (E10) du type de défaut et de mémorisation du défaut dans une mémoire électronique si la vérification confirme le défaut ou **en ce qu'**il met en oeuvre une étape supplémentaire de modification (E11) du modèle de référence de l'agent local si le défaut n'est pas vérifié.

3. Procédé de diagnostic d'un système photovoltaïque (1) selon la revendication 1 ou 2, **caractérisé en ce que** l'agent gestionnaire local (30; 30', 30") met en oeuvre les étapes suivantes :

- formation de groupes d'agents locaux selon un ou plusieurs modèles de regroupement, notamment selon des groupes de voisins regroupant des sous-ensembles du système photovoltaïque positionnés à proximité, et selon des groupes de semblables regroupant des sous-ensembles présentant des paramètres similaires comme une même orientation et inclinaison ;

- en cas de réception d'un message de défaut par un agent local, l'étape de vérification (E9) du défaut comprend la comparaison d'au moins une grandeur de fonctionnement de l'agent local avec la même grandeur obtenue pour les autres agents d'un même groupe, et si le défaut n'est pas vérifié, modification d'un ou plusieurs modèle(s) de regroupement de l'agent gestionnaire local (30; 30', 30") et répétition de l'étape de vérification (E9) avec des regroupements différents de l'agent local concerné par le défaut.

4. Procédé de diagnostic d'un système photovoltaïque (1) selon l'une des revendications précédentes, **caractérisé en ce qu'**il comprend les étapes préalables suivantes dans une première phase d'enregistrement (P1) :

(E1) : création d'un agent par la réception de données liées à son fonctionnement, comprenant des données physiques et des données géométriques, comme son positionnement, son orientation et inclinaison ;
(E2) : définition d'un modèle de référence permettant de calculer une ou plusieurs grandeurs de référence représentative(s) du fonctionnement de l'agent;
(E3) : enregistrement de l'agent dans une mémoire électronique formant un annuaire (31) au niveau de l'agent gestionnaire local (30; 30', 30").

5. Procédé de diagnostic d'un système photovoltaïque (1) selon la revendication précédente, **caractérisé en ce que** l'annuaire (31) comprend les informations suivantes pour chaque agent module (12, 13, 14) ou capteur (23, 24, 25) du système photovoltaïque (1) :

- L'adresse et/ou l'identifiant ;
- Des informations techniques comme des données géométriques, une orientation, une inclinaison, une position ;
- Une fonction de chaque agent, comme la fonction de module ou de capteur, qui permet de connaître la fonctionnalité des composants physiques associés à chaque agent ;
- L'appartenance à un ou plusieurs groupes ;
- Un statut « actif » ou « inactif ».

6. Procédé de diagnostic d'un système photovoltaïque (1) selon la revendication 4, **caractérisé en ce qu'**il comprend le choix du modèle de référence pour un agent module pour lequel un capteur d'irradiance est disponible, ce modèle de référence permettant le calcul de la puissance de référence par au moins un module photovoltaïque par l'équation suivante :

$$P_{ref} = P_c \ {}^* \ \gamma \ G \ / \ G_0 \ {}^* \ [ \ (1 + \beta\alpha \ (T - 25) \ ]$$

Où $\gamma$ et $\beta$ sont des coefficients qui permettent de tenir compte des pertes du système photovoltaïque et de corriger le paramètre $\alpha$, qui est généralement fourni par le fabricant,
G est l'irradiance mesurée, T la température,
$P_c$ est la puissance crête du système photovoltaïque,
$G_0$ est l'irradiance de référence, égale à 1000W/m$^2$.

7. Procédé de diagnostic d'un système photovoltaïque (1) selon l'une des revendications précédentes, **caractérisé en ce que** l'agent gestionnaire local (30 ; 30', 30") gère les deux bases de données suivantes :

- une base de données (35) comprenant des informations sur l'historique des mesures passées, comme les profils de production et/ou de mesures de courant AC et/ou DC des modules du champ photovoltaïque (10 ; 10', 10") ;
- une base de données comprenant des informations sur les défauts des modules photovoltaïques et leurs conséquences sur leur production d'énergie.

8. Procédé de diagnostic d'un système photovoltaïque (1) selon l'une des revendications précédentes, **caractérisé en ce que** l'agent gestionnaire local (30 ; 30', 30") transfère un agent local en mode inactif en cas de détection d'un défaut.

9. Procédé de diagnostic d'un système photovoltaïque (1) selon l'une des revendications précédentes, **caractérisé en ce qu'**un agent gestionnaire global (40) échange des communications avec les différents agents locaux (30', 30") pour calculer des paramètres de transposition, notamment un angle de transposition entre les différents champs photovoltaïques.

10. Procédé de diagnostic d'un système photovoltaïque (1) selon la revendication précédente, **caractérisé en ce qu'**un agent gestionnaire global (40) met en oeuvre les étapes suivantes :

- Réception de mesures et/ou estimations de productions d'énergie par plusieurs champs photovoltaïques (10, 10'), par une transmission depuis chaque agent local (30', 30") concerné ;
- Transposition de ces mesures et/ou estimations par utilisation des paramètres de transposition ;
- Comparaison des mesures et/ou estimations transposées ;
- Détection d'une anomalie si les mesures et/ou estimations transposées d'un certain champ photovoltaïque s'éloignent de celles des autres,
- En cas de détection d'une anomalie, transmission d'une alerte de l'agent gestionnaire global (40) à l'agent gestionnaire local (30', 30").

11. Système photovoltaïque (1), **caractérisé en ce qu'**il comprend au moins un champ photovoltaïque (10 ; 10', 10"), des agents modules (12, 13, 14) associés à des sous-ensembles (2, 3, 4) d'au moins un module photovoltaïque du champ photovoltaïque (10 ; 10', 10"), un agent gestionnaire local (30 ; 30', 30"), et des dispositifs de communication (18, 19, 29) entre les différents agents, et **caractérisé en ce que** les agents modules et l'agent gestionnaire local comprennent des moyens logiciels qui mettent en oeuvre un procédé de diagnostic du système photovoltaïque (1) selon l'une des revendications 1 à 8.

12. Système photovoltaïque (1) selon la revendication précédente, **caractérisé en ce qu'**il comprend au moins un capteur et un agent capteur (23, 24, 25), du type capteur d'irradiance, de température, de données satellite.

13. Système photovoltaïque (1) selon la revendication précédente, **caractérisé en ce qu'**il comprend un agent gestionnaire global (40) relié par des dispositifs de communication (39', 39") à plusieurs agents gestionnaires locaux (30', 30").

**Patentansprüche**

1. Verfahren zur Diagnose eines Photovoltaiksystems (1), das mindestens ein Photovoltaikfeld (10), Modulagenten (12, 13, 14), die Teileinheiten (2, 3, 4) mindestens eines Photovoltaikmoduls eines Photovoltaikfelds (10; 10', 10") zugeordnet sind, ggf. einen oder mehrere Sensor(en) und ihren zugeordneten Sensoragenten enthält, wobei die Modulagenten und die Sensoragenten lokale Agenten bilden, und das Photovoltaiksystem (1) außerdem einen lokalen Verwaltungsagenten (30; 30', 30") und Kommunikationsvorrichtungen (18, 19, 29) zwischen den verschiedenen Agenten enthält, **dadurch gekennzeichnet, dass** es eine Diagnosephase (P2) enthält, die die Wiederholung der folgenden Schritte enthält:

(E5):Messen und/oder Schätzen einer oder mehrerer Betriebsgrößen einer Teileinheit (2, 3, 4) des Photovoltaiksystems (1) im Bereich eines zugeordneten lokalen Agenten (12, 13, 14);
(E6):Berechnen einer oder mehrerer Bezugsgrößen der Teileinheit des Photovoltaiksystems durch ein Bezugsmodell im Bereich des zugeordneten lokalen Agenten;
(E7):Vergleichen einer gemessenen oder geschätzten Größe mit der gleichen durch das Bezugsmodell erhaltenen Bezugsgröße;
(E8):im Fall eines Unterschieds, der eine vordefinierte Schwelle überschreitet, Übertragen einer Fehlernachricht durch den lokalen Agenten an den lokalen Verwaltungsagenten (30; 30', 30") und Durchführen des folgenden Schritts durch den lokalen Verwaltungsagenten:

(E9):Verifizieren des Fehlers im Bereich des lokalen Verwaltungsagenten durch Vergleich mit mindestens einer von einem anderen lokalen Agenten des Photovoltaiksystems gemessenen und/oder geschätzten ähnlichen Größe, die Ähnlichkeiten aufweist, wie eine benachbarte Positionierung und/oder eine gleiche Ausrichtung und Neigung.

2. Diagnoseverfahren eines Photovoltaiksystems (1) nach dem vorhergehenden Anspruch, **dadurch gekennzeichnet,**

**dass** der lokale Verwaltungsagent (30; 30', 30") einen zusätzlichen Schritt (E10) des Suchens der Fehlerart und des Speicherns des Fehlers in einem elektronischen Speicher durchführt, wenn die Verifizierung den Fehler bestätigt, oder dass es einen zusätzlichen Schritt des Änderns (E11) des Bezugsmodells des lokalen Agenten durchführt, wenn der Fehler nicht verifiziert wird.

3. Diagnoseverfahren eines Photovoltaiksystems (1) nach Anspruch 1 oder 2, **dadurch gekennzeichnet, dass** der lokale Verwaltungsagent (30; 30', 30") die folgenden Schritte durchführt:

 - Bilden von Gruppen lokaler Agenten gemäß einem oder mehreren Zusammenfassungsmodellen, insbesondere gemäß Gruppen von Nachbarn, die in der Nähe positionierte Teileinheiten des Photovoltaiksystems zusammenfassen, und gemäß Gruppen von Gleichen, die Teileinheiten zusammenfassen, die ähnliche Parameter aufweisen, wie eine gleiche Ausrichtung und Neigung;
 - im Fall des Empfangs einer Fehlernachricht durch einen lokalen Agenten enthält der Verifizierungsschritt (E9) des Fehlers den Vergleich mindestens einer Betriebsgröße des lokalen Agenten mit der für die anderen Agenten einer gleichen Gruppe erhaltenen gleichen Größe, und wenn der Fehler nicht verifiziert wird, die Änderung eines oder mehrerer Zusammenfassungsmodells(modelle) des lokalen Verwaltungsagenten (30; 30', 30") und die Wiederholung des Verifizierungsschritts (E9) mit anderen Zusammenfassungen des vom Fehler betroffenen lokalen Agenten.

4. Diagnoseverfahren eines Photovoltaiksystems (1) nach einem der vorhergehenden Ansprüche, **dadurch gekennzeichnet, dass** es die folgenden vorhergehenden Schritte in einer ersten Speicherphase (P1) enthält:

 (E1) :Erzeugen eines Agenten durch den Empfang von mit seinem Betrieb verbundenen Daten, die physikalische und geometrische Daten enthalten, wie seine Positionierung, seine Ausrichtung und seine Neigung;
 (E2):Definieren eines Bezugsmodells, das es ermöglicht, eine oder mehrere Bezugsgrößen zu berechnen, die für den Betrieb des Agenten repräsentativ sind;
 (E3):Speichern des Agenten in einem elektronischen Speicher, der ein Verzeichnis (31) im Bereich des lokalen Verwaltungsagenten (30; 30', 30") bildet.

5. Diagnoseverfahren eines Photovoltaiksystems (1) nach dem vorhergehenden Anspruch, **dadurch gekennzeichnet, dass** das Verzeichnis (31) die folgenden Informationen für jeden Modul- (12, 13, 14) oder Sensoragenten (23, 24, 25) des Photovoltaiksystems (1) enthält:

 - die Adresse und/oder die Kennung;
 - technische Informationen wie geometrische Daten, eine Ausrichtung, eine Neigung, eine Position;
 - eine Funktion jedes Agenten, wie die Modul- oder Sensorfunktion, die es ermöglicht, die Funktionalität der jedem Agenten zugeordneten physikalischen Bauteile zu kennen;
 - die Zugehörigkeit zu einer oder mehreren Gruppen;
 - ein Status "aktiv" oder "inaktiv".

6. Diagnoseverfahren eines Photovoltaiksystems (1) nach Anspruch 4, **dadurch gekennzeichnet, dass** es die Wahl des Bezugsmoduls für einen Modulagenten enthält, für den ein Bestrahlungssensor zur Verfügung steht, wobei dieses Bezugsmodul die Berechnung der Bezugsleistung durch mindestens ein Photovoltaikmodul durch die folgende Gleichung ermöglicht:

$$P_{ref} = P_c * \gamma\ G\ /\ G_0\ *\ [(1 + \beta\alpha\ (T - 25)]$$

wobei $\gamma$ und $\beta$ Koeffizienten sind, die es ermöglichen, Verluste des Photovoltaiksystems zu berücksichtigen und den Parameter $\alpha$ zu korrigieren, der allgemein vom Hersteller geliefert wird,
G die gemessene Bestrahlung, T die Temperatur ist, $P_c$ die Spitzenleistung des Photovoltaiksystems ist, $G_0$ die Bezugsstrahlung gleich 1000W/m$^2$ ist.

7. Diagnoseverfahren eines Photovoltaiksystems (1) nach einem der vorhergehenden Ansprüche, **dadurch gekennzeichnet, dass** der lokale Verwaltungsagent (30; 30'; 30") die zwei folgenden Datenbanken verwaltet:

 - eine Datenbank (35), die Informationen über den Verlauf der vorhergehenden Messungen, wie die Erzeugungs- und/oder Wechselstrom- und/oder Gleichstrom-Messprofile der Module des Photovoltaikfelds (10; 10', 10"), enthält;
- eine Datenbank, die Informationen über die Fehler der Photovoltaikmodule und ihre Konsequenzen für ihre Energieerzeugung enthält.

8. Diagnoseverfahren eines Photovoltaiksystems (1) nach einem der vorhergehenden Ansprüche, **dadurch gekennzeichnet, dass** der lokale Verwaltungsagent (30; 30', 30") im Fall der Erfassung eines Fehlers einen lokalen Agenten in den inaktiven Modus überführt.

9. Diagnoseverfahren eines Photovoltaiksystems (1) nach einem der vorhergehenden Ansprüche, **dadurch gekennzeichnet, dass** ein globaler Verwaltungsagent (40) Kommunikationen mit den verschiedenen lokalen Agenten (30', 30") austauscht, um Umsetzungsparameter zu berechnen, insbesondere einen Umsetzungswinkel zwischen den verschiedenen Photovoltaikfeldern.

10. Diagnoseverfahren eines Photovoltaiksystems (1) nach dem vorhergehenden Anspruch, **dadurch gekennzeichnet, dass** ein globaler Verwaltungsagent (40) die folgenden Schritte durchführt:

- Empfangen von Messungen und/oder Schätzungen von Energieerzeugungen durch mehrere Photovoltaikfelder (10, 10') durch eine Übertragung ausgehend von jedem betroffenen lokalen Agenten (30', 30");
- Umsetzen dieser Messungen und/oder Schätzungen durch Verwendung der Umsetzungsparameter;
- Vergleichen der umgesetzten Messungen und/oder Schätzungen;
- Erfassen einer Anomalie, wenn die umgesetzten Messungen und/oder Schätzungen eines bestimmten Photovoltaikfelds sich von denjenigen der anderen entfernen,
- im Fall der Erfassung einer Anomalie, Übertragen eines Alarms vom globalen Verwaltungsagenten (40) an den lokalen Verwaltungsagenten (30', 30").

11. Photovoltaiksystem (1), **dadurch gekennzeichnet, dass** es mindestens ein Photovoltaikfeld (10; 10', 10"), Modulagenten (12, 13, 14), die Teileinheiten (2, 3, 4) mindestens eines Photovoltaikmoduls des Photovoltaikfelds (10; 10', 10") zugeordnet sind, einen lokalen Verwaltungsagenten (30; 30', 30") und Kommunikationsvorrichtungen (18, 19, 29) zwischen den verschiedenen Agenten enthält, und **dadurch gekennzeichnet, dass** die Modulagenten und der lokale Verwaltungsagent Softwareeinrichtungen enthalten, die ein Diagnoseverfahren des Photovoltaiksystems (1) nach einem der Ansprüche 1 bis 8 durchführen.

12. Photovoltaiksystem (1) nach dem vorhergehenden Anspruch, **dadurch gekennzeichnet, dass** es mindestens einen Sensor und einen Sensoragenten (23, 24, 25), der Art Bestrahlungs-, Temperatur-, Satellitendatensensor enthält.

13. Photovoltaiksystem (1) nach dem vorhergehenden Anspruch, **dadurch gekennzeichnet, dass** es einen globalen Verwaltungsagenten (40) enthält, der durch Kommunikationsvorrichtungen (39', 39") mit mehreren lokalen Verwaltungsagenten (30', 30") verbunden ist.

## Claims

1. Diagnosis method for a photovoltaic system (1) comprising at least one photovoltaic array (10), module agents (12, 13, 14) that are associated with subassemblies (2, 3, 4) of at least one photovoltaic module of a photovoltaic array (10; 10', 10"), potentially one or more sensors and their associated sensor agent, the module agents and the sensor agents forming local agents, and the photovoltaic system (1) further comprising a local management agent (30; 30', 30") and communication devices (18, 19, 29) for communication between the various agents, **characterized in that** it comprises a diagnosis phase (P2), which comprises the repetition of the following steps:

(E5): measuring and/or estimating one or more operating quantities of a subassembly (2, 3, 4) of the photovoltaic system (1) at an associated local agent (12, 13, 14);
(E6): calculating one or more reference quantities of said subassembly of the photovoltaic system by means of a reference model at said associated local agent;
(E7): comparing a measured or estimated quantity with the same reference quantity obtained by the reference model;
(E8): in the case of a difference exceeding a predefined threshold, transmitting a fault message via the local agent to the local management agent (30; 30', 30") and implementing the following step by means of the local management agent:

(E9): verifying the fault at the local management agent by comparing with at least one similar quantity measured and/or estimated by a separate local agent of the photovoltaic system exhibiting similarities, such as a neighbouring position and/or one and the same orientation and tilt.

2. Diagnosis method for a photovoltaic system (1) according to the preceding claim, **characterized in that** the local management agent (30; 30', 30") implements an additional step of searching (E10) for the type of fault and storing the fault in an electronic memory if the verification confirms the fault or **in that** it implements an additional step of modifying (E11) the reference model of the local agent if the fault is not verified.

3. Diagnosis method for a photovoltaic system (1) according to Claim 1 or 2, **characterized in that** the local management agent (30; 30', 30") implements the following steps:

- forming groups of local agents according to one or more grouping models, in particular in groups of neighbours grouping together subassemblies of the photovoltaic system that are positioned in proximity, and in groups of like kinds grouping together subassemblies having similar parameters such as one and the same orientation and tilt;
- in the case of reception of a fault message by a local agent, the step of verifying (E9) the fault comprises comparing at least one operating quantity of the local agent with the same quantity obtained by the other agents of one and the same group, and if the fault is not verified, modifying one or more grouping models of the local management agent (30; 30', 30") and repeating the verification step (E9) with different groupings of the local agent concerned with the fault.

4. Diagnosis method for a photovoltaic system (1) according to one of the preceding claims, **characterized in that** it comprises the following prior steps in a first recording phase (P1):

- (E1): creating an agent by receiving data linked to its operation, comprising physical data and geometric data, such as its positioning, orientation and tilt;
- (E2): defining a reference model allowing one or more reference quantities that are representative of the operation of the agent to be calculated;
- (E3): recording the agent in an electronic memory forming a directory (31) at the local management agent (30; 30', 30").

5. Diagnosis method for a photovoltaic system (1) according to the preceding claim, **characterized in that** the directory (31) comprises the following information for each module (12, 13, 14) or sensor (23, 24, 25) agent of the photovoltaic system (1):

- the address and/or the identifier;
- technical information such as geometric data, an orientation, a tilt, a position;
- a function of each agent, such as the module or sensor function, which makes it possible to know the functionality of the physical components that are associated with each agent;
- membership of one or more groups;
- an "active" or "inactive" status.

6. Diagnosis method for a photovoltaic system (1) according to Claim 4, **characterized in that** it comprises the choice of reference model for a module agent for which an irradiance sensor is available, this reference model making it possible to calculate the reference power by at least one photovoltaic module via the following equation:

$$P_{ref} = P_c * \gamma G/G_0 * [(1 + \beta\alpha(T - 25)]$$

Where $\gamma$ and $\beta$ are coefficients which make it possible to account for losses from the photovoltaic system and to correct the parameter $\alpha$, which is generally provided by the manufacturer;
G is the measured irradiance, T is the temperature;
$P_c$ is the peak power of the photovoltaic system;
$G_0$ is the reference irradiance, equal to 1000 W/m$^2$.

7. Diagnosis method for a photovoltaic system (1) according to one of the preceding claims, **characterized in that** the local management agent (30; 30', 30") manages the following two databases:

- a database (35) comprising information on the history of past measurements, such as the production and/or AC and/or DC current measurement profiles of the modules of the photovoltaic array (10; 10', 10");
- a database comprising information on the faults in the photovoltaic modules and their effects on their energy production.

8. Diagnosis method for a photovoltaic system (1) according to one of the preceding claims, **characterized in that** the local management agent (30; 30', 30") switches a local agent to inactive mode in the event of detection of a fault.

9. Diagnosis method for a photovoltaic system (1) according to one of the preceding claims, **characterized in that** an overall management agent (40) exchanges communications with the various local agents (30', 30") to calculate transposition parameters, in particular an angle of transposition between the various photovoltaic arrays.

10. Diagnosis method for a photovoltaic system (1) according to the preceding claim, **characterized in that** an overall management agent (40) implements the following steps:

- receiving measurements and/or estimates of energy produced by multiple photovoltaic arrays (10, 10'), by means of a transmission from each local agent (30', 30") concerned;
- transposing these measurements and/or estimates by using the transposition parameters;
- comparing the transposed measurements and/or estimates;
- detecting an anomaly if the transposed measurements and/or estimates for a certain photovoltaic array deviate from those for the others;
- in the case of detection of an anomaly, transmitting an alert from the overall management agent (40) to the local management agent (30', 30").

11. Photovoltaic system (1), **characterized in that** it comprises at least one photovoltaic array (10; 10', 10"), module agents (12, 13, 14) that are associated with subassemblies (2, 3, 4) of at least one photovoltaic module of the photovoltaic array (10; 10', 10"), a local management agent (30; 30', 30") and communication devices (18, 19, 29) for communication between the various agents, and **characterized in that** the module agents and the local management agent comprise software means which implement a diagnosis method for the photovoltaic system (1) according to one of Claims 1 to 8.

12. Photovoltaic system (1) according to the preceding claim, **characterized in that** it comprises at least one sensor and one sensor agent (23, 24, 25), of irradiance sensor, temperature sensor or satellite data sensor type.

13. Photovoltaic system (1) according to the preceding claim, **characterized in that** it comprises an overall management agent (40) linked by communication devices (39', 39") to multiple local management agents (30', 30").

Fig.1

Fig.2

Fig.3

Fig.4

**EP 3 016 278 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013170422 A